Europäisches Patentamt

European Patent Office

Office européen des brevets

(19)

(11) **EP 0 713 645 B1**

(12) **EUROPEAN PATENT SPECIFICATION**

(45) Date of publication and mention
of the grant of the patent:
**31.07.2002 Bulletin 2002/31**

(21) Application number: **95918182.7**

(22) Date of filing: **12.05.1995**

(51) Int Cl.[7]: **A01N 37/36**, A01N 59/20

(86) International application number:
**PCT/JP95/00915**

(87) International publication number:
**WO 95/31103 (23.11.1995 Gazette 1995/50)**

(54) **AGROHORTICULTURAL BACTERICIDE**

LAND- UND GARTENBAUWIRTSCHAFTLICHE BAKTERIZIDE

BACTERICIDE UTILISE EN AGRICULTURE ET EN HORTICULTURE

(84) Designated Contracting States:
**DE FR GB IT**

(30) Priority: **17.05.1994 JP 10274794**

(43) Date of publication of application:
**29.05.1996 Bulletin 1996/22**

(73) Proprietor: **OTSUKA KAGAKU KABUSHIKI KAISHA**
**Osaka-shi, Osaka 540 (JP)**

(72) Inventors:
• **TAKAGI, Yasushi**
**Osaka-shi Osaka 547 (JP)**

• **YAMAGUCHI, Kunio**
**Naruto-shi Tokushima 772 (JP)**

(74) Representative: **Cresswell, Thomas Anthony et al**
**J.A. KEMP & CO.**
**14 South Square**
**Gray's Inn**
**London WC1R 5JJ (GB)**

(56) References cited:
WO-A-91/13552          JP-A- 3 178 969
JP-A- 4 128 217        US-A- 4 055 655
US-A- 4 956 188        US-A- 5 023 359

## Description

The present invention relates to a method of controlling disease damage to a crop plant.

Various germicides (bactericides/fungicides) have so far been used in agriculture and horticulture to control diseases of rice plants, vegetables, fruit trees, flowering plants and other crop plants. Typical examples include benomyl (generic name: methyl 1-butylcarbamoyl-2-benzimidazolcarbamate), thiuram (generic name: bis (dimethylthiocarbamoyl)disulfide), oxolinic acid and the like. However, a problem with such prior art germicides is that, upon successive application, strains resistant to them develop. Their biocidal effects are therefore frequently counteracted.

On the other hand, copper-based germicidal formulations are free of resistant strain development. Therefore, copper formulations containing cupric hydroxide, copper nonylphenolsulfonate or the like as an active ingredient are currently in general use. However, to achieve satisfactory germicidal effects with such prior art copper formulations it is essential to use them in high concentrations. However, high concentrations are undesirable because they result in manifestations of phytotoxicity and cause leaf burn and other injuries.

Furthermore, concern about environmental problems is increasing nowadays. It is therefore highly desirable that a safer germicide for agricultural and horticultural use be developed.

It is an object of the present invention to provide a method of controlling disease damage to a crop plant which is effective not only on general bacteria and fungi but also on drug-resistant microbial strains, and will not cause chemical in juries such as leaf burn, and is environmentally safe.

Accordingly the invention provides a method of controlling disease damage to a crop plant, which method comprises applying to the plant a composition which comprises cupric gluconate as an active ingredient.

The invention also provides the use of a composition comprising cupric gluconate in controlling plant disease caused by bacteria, fungi or drug resistant microbial strains.

Cupric (or copper (II)) gluconate is known as a food additive and is very safe from an environmental viewpoint.

US 5,023,359 discloses compositions of Copper (II) gluconate for the treatment of been against Varroa mites.

US 4,956,188 discloses compositions comprising Copper (II) gluconate as a nutritional supplement to animal feed.

JP 4 128 217 discloses a composition comprising Cu(II) gluconate and an amphotenic surfactant for use in formulations for dental care.

To minimize phytotoxicity further, calcium carbonate may be added to the composition used in the method of the present invention. Furthermore, the composition may include one or more known insecticides, bactericides, fungicides, herbicides, fertilizers and like farm chemicals unless the effects of the invention are lessened.

Examples of insecticides are, for instance, cyanophos, fenthion, fenitrothion, dichlofenthion, pirimiphos methyl, diazinon, isoxathion, pyridafenthion, chloropyrifos methyl, chloropyrifos, vamidothion, malathion, phenthoate, dimethoate, thiometon, phosalone, phosmet, methidathion, prothiophos, sulprofos, profenofos, pyraclofos, dichlorvos, monocrotophos, naled, chlorfenvinphos, acephate, EPN, ethion, carbaryl, fenobucarb, etiofencarb, pirimicarb, carbosulfan, benfracarb, methomyl, thiodicarb, alanicarb, biphenthrin, permethrin, cypermethrin, cyhalothrin, cyfluthrin, fenpropathrin, tralomethrin, fenvalerate, flucitrinate, fluvalinate, ethofenprox, cartap, thiocyclam, bensultap, diflubenzuron, teflubenzuron, chlorfluazuron, flufenoxuron, buprofezin, fenoxycarb, benzoepin, imidaclopride, sodium oleate, kelthane, fensobromorate, tetradifon, propargite, amitraz, benzomate, fenothiocarb, hexythiazox, fenbutatin oxide, fenprioximate, tebufenpirad, pyridapen, clofentezin and polynactin complexes.

Examples of bactericides and/or fungicides are inorganic copper, oxine-copper, inorganic sulfur, sodium hydrogen carbonate, potassium hydrogen carbonate, captan, dichlofluanide, chlorothalonil, fusaride, iprovenfos, edifenphos, phosethyl, thiophanate methyl, benomyl, thiabendazole, iprodione, vinclozolin, procymidone, fluorimide, metalaxyl, oxadixyl, triadimefon, bitertanol, myclobutanil, hexaconazole, propiconazole, difenoconazole, iproconazole, imibenconazole, triflumizole, proclanoz, peflazoate, fenarimol, pirifenox, trifolin, UBF-910, dithianon, quinomethionate, dinocap, benthiazole, triazine, ferimuzon, fluazinam, dietofencarb, oxolinic acid, iminocutadine acetate, iminocutadine alvesilate, kasugamycin, polyoxin, streptomycin, oxytetracycline, cymoxanil, dimetomor, ICI A 5504, cresoxyme methyl, fludioxonil, mepanipyrim, pyrimetanil and cyprodinil.

Examples of herbicides are, for example, fluazifop, quizalofop ethyl, aloxydim and cetoxydim.

The composition used in the method of the present invention may comprise the cupric gluconate in powder form as such or as an aqueous solution of the same.

In preparing the composition used in the method of the present invention, the water species to be used is not limited to any particular one but may be, for example, tap water, deionized water, activated carbon-treated water or distilled water. The concentration of the cupric gluconate is not limited to any particlar level but may generally be 0 to less than 100% by weight, preferably about 5 to 90% by weight.

Alternatively, the composition used in the method of the present invention, like the known copper formulations, may be prepared in the form of popular formulations such as spray formulations, wettable powders, emulsions, dusts, granules, etc. using appropriate carriers, surfactants and so on as necessary. Examples of suitable carriers are known ones such as clay, kaolin, bentonite, talc, acid clay, diatomaceous earth, calcium carbonate, nitrocellulose, starch, gum arabic, gaseous carbon dioxide, freons, benzene, kerosene, alcohols, acetone, xylene, methylnaphthalene, cyclohexane, animal fatty acid esters, potassium sulfate, potassium chloride, potassium nitrate, calcium dihydrogen phosphate and sodium sulfate. Examples of the surfactants are known ones such as lecithin, sucrose fatty acid esters, sorbitan fatty acid esters, monoglycerides, polypropylene glycol fatty acid esters, soaps, higher alcohol sulfate esters, alkylsulfonic acid salts, quaternary ammonium salts, polyalkylene oxides, sodium ligninsulfonate, sodium alkylbenzenesulfonates, sodium dinaphthylmethanesulfonate, sodium lauryl alcohol sulfate and polyoxyethylene alkylaryl ethers.

In applying the composition according to the present invention, known application methods can be widely employed. Common methods include dipping, spraying and drenching.

In the case of rice or such tuber plants as potato, paddy (unhulled rice) or seed potato, dipping treatment is preferred. In the case of other crop plants, foliage application is preferred.

Prior to application to crop plants, the composition is diluted with water or some other diluent to an appropriate concentration.

In applying the composition to crop plants, the concentration of the active ingredient cupric gluconate may be suitably selected within a wide range according to the crop plant to be treated, the disease to be controlled, the stage of growth of the crop plant to be treated and the method of treatment, among others. Thus, in the case of dipping treatment, for instance, a standard concentration is generally about 200 to 5,000 ppm (about 25 to 700 ppm as copper), preferably about 500 to 2,000 ppm (about 70 to 280 ppm as copper). In the case of foliage application, a standard concentration is generally about 50 to 2,000 ppm (about 5 to 280 ppm as copper), preferably about 250 to 1,000 ppm (about 30 to 140 ppm as copper).

The crop plant to be treated and the disease to be controlled by the method of the present invention is not particularly limited but can include a wide variety. Thus, as concrete examples of the target crop plant, there may be mentioned, for example, rice, vegetables, fruit trees and flowering plants, and, as concrete examples of the target disease, there may be mentioned bacterial diseases as well as fungal diseases such as powdery mildew, late blight and downy mildew, among others.

The method of the present invention is particularly effective against the following crop plant diseases.

| | |
|---|---|
| Rice : | bacterial grain rot, bacterial seedling blight, bacterial brown stripe, "bakanae" disease (gibberella infection), Helminthosporium leaf spot, blast; |
| Cucumber : | bacterial spot, downy mildew, powdery mildew; |
| Tomato : | late blight, leaf spot; |
| Lettuce : | bacterial spot, bacterial soft rot, rot; |
| Spinach : | downy mildew; |
| Onion, Japanese radish, Chinese cabbage : | bacterial soft rot; |
| Melon : | angular leaf spot, downy mildew, powdery mildew; |
| Cabbage : | black rot, bacterial soft rot, powdery mildew; |
| Carrot : | leaf blight; |
| Potato ; | late blight, scab; |
| Citrus : | canker, greasy spot, melanose; |
| Grape : | downy mildew, rust; |
| Kiwi fruit : | bacterial blossom blight, canker; |
| Cherry : | short hole; |
| Japanese | apricot : bacterial canker; |
| Peach : | bacterial short hole; |
| Tea plant : | bacterial shoot blight, anthracnose, net blister blight, blister blight; |
| Hop : | downy mildew; |
| Rose : | powdery mildew. |

The method of the present invention is also effective in controlling pathogenic micro-organisms in nutrient solutions in nutriculture.

The method of the present invention is particularly effective against such pathogenic microorganisms as Erwinia species, Pseudomonas species, Xanthomonas species and like bacteria and mastigomycotina species and like fungi.

The method of the present invention shows an excellent effect not only upon ordinary bacteria and fungi but also upon strains resistant to chemicals.

The method of the present invention is effective in preventing disease damage to crop plants at markedly reduced concentrations of the applied composition compared with the prior art copper preparations.

The method of the present invention, will not result in any chemical injury to plants to which it is applied.

The method of the present invention is favourable from an environmental safety viewpoint.

The following formulation example, working examples and comparative examples are further illustrative of the present invention.

Formulation Example 1

A germicidal composition with an active ingredient concentration of 50% was prepared by admixing 50 parts by weight of cupric gluconate with 50 parts by weight of water.

Example 1 (rice bacterial seedling blight control test)

The germicidal composition as prepared in Formulation Example 1 was diluted with water to the active ingredient concentration indicated below in Table 1. The dilution was placed in a 100-ml beaker and 10 g of paddy infected with the causative microorganism of rice seedling blight was immersed therein for 24 hours. The thus-treated paddy was presoaked at 20°C for 3 days, then stimulated for germination at 32°C for 1 day, and sowed into a 12 x 12 cm plastic case. The sown case was maintained in a greenhouse at a temperature of 32°C for 2 days and then seedlings showing disease symptoms were counted 2 weeks after sowing. The control percentage was calculated as follows:

% Control = (number of diseased seedlings in no treatment

plot - number of diseased seedlings in

treatment plot)/(number of diseased

seedlings in no treatment plot) x 100

For comparison, two germicides (wettable powders) available on the market were also tested in the same manner. The results obtained are shown in Table 1.

Table 1

| Germicide | Active ingredient concentration (ppm) | Copper concentration (ppm) | % Control | Phytotoxicity |
|---|---|---|---|---|
| Germicide of invention | 1000 | 140 | 80 | None |
| Kocide Bordeaux | 307 | 200 | 61 | None |
| Starner | 1000 | - | 44 | None |
| No treatment | - | - | 0 | None |
| Kocide Bordeaux (tradename; active ingredient: cupric hydroxide) Starner (tradename; active ingredient: oxolinic acid) | | | | |

Example 2 (rice seeding rot by bacterial grain rot pathogen control test)

The procedure of Example 1 was followed except that paddy infected with the causative microorganism of rice bacterial grain rot was used and diseased seedlings were counted 3 weeks after sowing. The control percentahe was calculated as decribed in Example 1. The results are shown in Table 2.

Table 2

| Germicide | Copper concentration (ppm) | % Control | Phytotoxicity |
|---|---|---|---|
| Germicide of invention | 140 | 97 | None |
| Kocide Bordeaux | 200 | 81 | None |
| Sterna | - | 97 | None |
| No treatment | - | 0 | None |

Example 3 (cucumber bacterial spot control test)

The germicidal composition as prepared in Formulation Example 1 was diluted with water to the active ingredient concentration indicated below in Table 3. A cucumber seedling at the single true leaf stage planted in a black vinyl pot was sprayed with 5 ml of the dilution and, 5 hours later, it was inoculated with the causative microorganism of cucumber bacterial spot by spraying. This cucumber seedling was kept under high-humidity conditions at 25°C for 7 days and then the area of lesion on the diseased leaves was determined and the lesion area percentage was calculated. The control percentage was calculated using the expression shown below. For comparison, two germicides available on the market were also tested in the same manner. The results obtained are shown in Table 3.

% Control = (lesion area percentage in no treatment

plot - lesion area percentage in treatment

plot)/(lesion area percentage in no

treatment plot) x 100

Table 3

| Germicide | Active ingredient concentration (ppm) | Copper concentration (ppm) | % Control | Phytotoxicity |
|---|---|---|---|---|
| Germicide of invention | 500 | 70 | 80 | None |
| Kocide Bordeaux | 768 | 500 | 73 | Leaf burn |
| Yonepon | 600 | 58 | 10 | None |
| No treatment | - | - | 0 | None |
| Kocide Bordeaux (tradename; active ingredient: cupric hydroxide) Yonepon (tradename; active ingredient: copper nonylphenolsulfonate) | | | | |

Example 4 (tomato late blight control test)

The germicidal composition as prepared in Formulation Example 1 was diluted with water to the active ingredient concentration indicated below in Table 4. A tomato seedling at the four true leaf stage planted in a black vinyl pot was sprayed with 5 ml of the dilution and, 5 hours later, inoculated with spores of the causative microorganism of tomato late blight by spraying. This tomato seedling was kept under high humidity conditions at 25°C for 7 days and then diseased leaves were counted. The control percentage was calculated as indicated in Example 3. For comparison, a germicide available on the market was also tested in the same manner. The results obtained are shown in Table 4.

Table 4

| Germicide | Active ingredient concentration (ppm) | Copper concentration (ppm) | % Control | Phytotoxicity |
|---|---|---|---|---|
| Germicide of invention | 500 | 70 | 73 | None |
| | 200 | 28 | 70 | None |
| | 100 | 14 | 61 | None |
| Kocide Bordeaux | 768 | 500 | 62 | None |
| | 307 | 200 | 60 | None |
| | 154 | 100 | 54 | None |
| No treatment | - | - | 0 | None |
| Kocide Bordeaux (tradename; active ingredient: cupric hydroxide) | | | | |

Example 5 (cucumber powdery mildew control test)

The germicidal composition as prepared in Formulation Example 1 was diluted with water to the active ingredient concentration indicated below in Table 5. A cucumber seedling at the single true leaf stage planted in a black vinyl pot was sprayed with 5 ml of the dilution and, 5 hours later, inoculated with spores of the benlate-resistant causative microorganism of cucumber powdery mildew by spraying. This cucumber seedling was kept in a greenhouse for 10 days and then diseased cucumber cotyledons were counted and the control percentage was calculated as indicated in Example 3. For comparison, two germicides available on the market were also tested in the same manner. The results obtained are shown in Table 5.

Table 5

| Germicide | Active ingredient concentration (ppm) | Copper concentration (ppm) | % Control | Phytotoxicity |
|---|---|---|---|---|
| Germicide of invention | 500 | 70 | 61 | None |
| Kocide Bordeaux | 768 | 500 | 30 | Leaf burn |
| Benlate | 500 |  | 35 | None |
| No treatment | - | - | 0 | None |
| Kocide Bordeaux (tradename; active ingredient: cupric hydroxide) Benlate (tradename; active ingredient: benomyl) | | | | |

Example 6 (rice "bakanae" disease control test)

The procedure of Example 1 was followed except that paddy infected with the causative microorganism of rice "bakanae" disease was used and diseased seedlings were counted 4 weeks after sowing. The control percentage was calculated in the same manner. For comparison, two germicides available on the market were also tested in the same manner. The results are shown in Table 6.

Table 6

| Germicide | Active ingredient concentration (ppm) | Copper concentration (ppm) | % Control | Phytotoxicity |
|---|---|---|---|---|
| Germicide of invention | 2000 | 280 | 95 | None |
|  | 1000 | 140 | 84 | None |
| Kocide Bordeaux | 214 | 143 | 47 | None |
| Benlate T | 2000 | - | 31 | None |
| No treatment | - | - | 0 | None |
| Kocide Bordeaux (tradename; active ingredient: cupric hydroxide) Benlate T (tradename; active ingredients: benomyl and thiuram) | | | | |

Example 7 (Chinese cabbage bacterial soft rot control test)

The germicidal composition as prepared in Formulation Example 1 was diluted with water to the respective active ingredient concentrations indicated below in Table 7. Japanese cabbage laminae injured with a bundle of needles were instantaneously dipped in one of the dilutions, air-dried and then inoculated with the causative microorganism of Chinese cabbage bacterial soft rot by placing on the needle lesion a paper disk impregnated with the causative microorganism. After maintaining in a plastic moist chamber for 4 days, diseased leaves were counted and the control percentage was calculated as indicated in Example 3. For comparison, a germicide available on the market was tested in the same manner. The results are shown in Table 7.

Table 7

| Germicide | Active ingredient concentration (ppm) | Copper concentration (ppm) | % Control | Phytotoxicity |
|---|---|---|---|---|
| Germicide of invention | 500 | 70 | 100 | None |
| | 200 | 28 | 100 | None |
| | 100 | 14 | 63 | None |
| Kocide Bordeaux | 768 | 500 | 100 | Leaf burn |
| | 307 | 200 | 100 | Leaf burn |
| | 154 | 100 | 63 | None |
| No treatment | - | - | 0 | None |
| Kocide Bordeaux (tradename; active ingredient: cupric hydroxide) | | | | |

Example 8 (rice Helminthosporium leaf spot control test)

The procedure of Example 1 was followed except that paddy infected with the causative microorganism of rice Helminthosporium leaf spot was used and diseased seedlings were counted 3 weeks after sowing. For comparison, a germicide available on the market was also tested in the same manner. The results are shown in Table 8.

Table 8

| Germicide | Active ingredient concentration (ppm) | Copper concentration (ppm) | % Control | Phytotoxicity |
|---|---|---|---|---|
| Germicide of invention | 1000 | 140 | 87 | None |
| Kocide Bordeaux | 307 | 200 | 51 | None |
| No treatment | - | - | 0 | None |
| Kocide Bordeaux (tradename; active ingredient: cupric hydroxide) | | | | |

Example 9 (rice blast control test)

The germicidal composition as prepared in Formulation Example 1 was diluted with water to the active ingredient concentration indicated below in Table 9 and the dilution was placed in a 100-ml beaker, and 10 g of paddy infected with the causative microorganism of rice damping-off was immersed therein for 24 hours. A portion of the-thus-treated paddy was sowed onto a moistened filter paper placed in a petri dish and kept at 25°C for 3 days. Then, those grains of paddy on which formation of spores of the causative microorganism of rice blast (Pyricularia oryzae) were counted as diseased paddy grains and the control percentage was calculated as follows:

% Control = (number of diseased paddy grains in no

treatment plot - number of diseased paddy

grains in treatment plot)/(number of

diseased paddy grains in no treatment

plot) x 100

For comparison, a germicide available on the market was also tested in the same manner. The results thus obtained are shown in Table 9.

Table 9

| Germicide | Active ingredient concentration (ppm) | Copper concentration (ppm) | % Control | Phytotoxicity |
|---|---|---|---|---|
| Germicide of invention | 1000 | 140 | 100 | None |
| Kocide Bordeaux | 307 | 200 | 67 | None |
| No treatment | - | - | 0 | None |
| Kocide Bordeaux (tradename; active ingredient: cupric hydroxide) | | | | |

**Claims**

1.  A method of controlling disease damage to a crop plant, which method comprises applying to the plant a composition comprising cupric gluconate.

2.  A method according to claim 1 or 2 wherein the composition comprises the cupric gluconate in an amount of from 5 to 90% by weight.

3.  A method according to claim 1 or 2 wherein the composition further includes calcium carbonate.

4.  A method according to any one of the preceding claims wherein the composition further includes an insecticide, bactericide, fungicide, herbicide or fertiliser.

5.  A method according to any one of claims 1 to 4 which is carried out by dipping, spraying or drenching the plant.

6.  Use of a composition comprising cupric gluconate in controlling plant disease caused by bacteria, fungi or drug-resistant microbial strains.

7.  Use according to claim 6 wherein the composition comprises the cupric gluconate in an amount of from 5 to 90% by weight.

8.  Use according to claim 6 or 7 wherein the composition further comprises calcium carbonate.

9.  Use according to any one of claims 6 to 8 wherein the composition further includes an insecticide, herbicide or fertiliser.

**Patentansprüche**

1.  Verfahren zur Kontrolle von Krankheitsschädigung einer Feldfruchtpflanze, wobei das Verfahren das Aufbringen einer Zusammensetzung, umfassend Kupfergluconat, auf die Pflanze umfaßt.

2.  Verfahren nach Anspruch 1, wobei die Zusammensetzung Kupfergluconat in einer Menge von 5 bis 90 Gew.-% umfaßt.

3.  Verfahren nach Anspruch 1 oder 2, wobei die Zusammensetzung femer Calciumcarbonat einschließt.

4.  Verfahren nach einem der vorangegangenen Ansprüche, wobei die Zusammensetzung ferner ein Insektizid, Bakterizid, Fungizid, Herbizid oder einen Dünger einschließt.

5.  Verfahren nach einem der Ansprüche 1 bis 4, welches durch Tauchen, Besprühen oder Giessen der Pflanze durchgeführt wird.

6.  Verwendung einer Zusammensetzung, umfassend Kupfergluconat, zur Kontrolle einer Pflanzenkrankheit, welche durch Bakterien, Pilze oder wirkstoffresistente Mikrobenstämme verursacht wird.

**7.** Verwendung nach Anspruch 6, wobei die Zusammensetzung das Kupfergluconat in einer Menge von 5 bis 90 Gew.-% umfaßt.

**8.** Verwendung nach Anspruch 6 oder 7, wobei die Zusammensetzung femer Calciumcarbonat umfaßt.

**9.** Verwendung nach einem der Ansprüche 6 bis 8, wobei die Zusammensetzung ferner ein Insektizid, Herbizid oder einen Dünger einschließt.

**Revendications**

**1.** Technique de contrôle des dommages causés par la maladie dans une plante de culture, laquelle technique comprend l'application à ladite plante d'une composition contenant du gluconate cuivrique.

**2.** Technique selon la revendication 1 ou la revendication 2, dans laquelle la composition contient du gluconate cuivrique en quantité comprise entre 5 et 90 % en poids.

**3.** Technique selon la revendication 1 ou la revendication 2, dans laquelle la composition comprend aussi du carbonate de calcium.

**4.** Technique selon l'une quelconque des revendications précédentes, dans laquelle la composition comprend aussi un insecticide, un bactéricide, un fongicide, un herbicide ou un engrais.

**5.** Technique selon l'une quelconque des revendications 1 à 4, qui est mise en oeuvre par immersion, pulvérisation ou par trempage de la plante.

**6.** Utilisation d'une composition contenant du gluconate cuivrique pour le contrôle de maladies de plantes causées par des bactéries, des champignons ou des souches microbiennes résistantes aux médicaments.

**7.** Utilisation selon la revendication 6, dans laquelle la composition contient du gluconate cuivrique en quantité comprise entre 5 et 90 % en poids.

**8.** Utilisation selon la revendication 6 ou la revendication 7, dans laquelle la composition contient aussi du carbonate de calcium.

**9.** Utilisation selon l'une quelconque des revendications 6 à 8, dans laquelle la composition comprend aussi un insecticide, un herbicide ou un engrais.